(19) Europäisches Patentamt
European Patent Office
Office européen des brevets

(11) Publication number: **0 430 657 A1**

(12) # EUROPEAN PATENT APPLICATION

(21) Application number: **90312905.4**

(51) Int. Cl.[5]: **C09K 5/04**

(22) Date of filing: **28.11.90**

(30) Priority: **29.11.89 JP 309867/89**
**05.10.90 JP 268068/90**

(43) Date of publication of application:
**05.06.91 Bulletin 91/23**

(84) Designated Contracting States:
**AT BE CH DE DK ES FR GB GR IT LI LU NL SE**
**Bulletin**

(71) Applicant: **ASAHI DENKA KOGYO KABUSHIKI KAISHA**
**2-35, Higashiogu 7-chome**
**Arakawa-ku Tokyo 116(JP)**

(72) Inventor: **Kamakura, Tamiji**
**875-3, Kunugi, Fujishirocho**
**Kitasouma-Gun, Ibaraki(JP)**
Inventor: **Tatsumi, Yukio**
**Asahi Matsudo Mansion 226, 705-1, Koyama**
**Matsudo-shi, Chiba(JP)**
Inventor: **Namiwa, Kimiyoshi**
**Asahiryo, 46-21, Higashiogu 8-chome**
**Arakawa-ku, Tokyo(JP)**

(74) Representative: **Taylor, Phillip Kenneth et al**
**W.P. THOMPSON & CO. Coopers Building**
**Church Street**
**Liverpool L1 3AB(GB)**

(54) **Lubricant for refrigerators.**

(57) The invention relates to a lubricant for a refrigerator using a chlorine-free fluorocarbon such as fluorocarbon 134a as the refrigerant and characterised by comprising a neopentylpolyol ester of a fatty acid having 2 to 6 carbon atoms. The invention also includes a refrigerant composition characterised in that it comprises a chlorine-free fluorocarbon and lubricant of the present invention in which the volume ratio of neopentylpolyol ester(s) to chlorine-free fluorocarbon is from 99:1 to 1:99.

EP 0 430 657 A1

## LUBRICANT FOR REFRIGERATORS

The present invention relates to a lubricant for refrigerators. More particularly it relates to a neopentylpolyol ester lubricant for refrigerators which is well compatible with a chlorine-free fluorocarbon refrigerant such as fluorocarbon 134a (l,l,l,2-tetrafluoroethane) used in a refrigerator.

Fluorocarbon compounds are excellent materials in respects of chemical stability, low toxicity and incombustibility, so that they have been used in the fields of refrigerant, aerosol, foaming, cleaning and so on. Recently, however, there is a strong movement on foot for the reduction in the production and consumption of specific kinds of fluorocarbons, because the fluorocarbons emitted into the open air not only destroy the ozonosphere but also cause the warning of the earth's surface, the so-called "greenhouse effect".

Accordingly, the development of a fluorocarbon which is free from the danger of causing the destruction of the ozonosphere or the greenhouse effect, i.e., a fluorocarbon which does not contain any chlorine atom and is relatively easily decomposable is in progress.

Under these circumstances, fluorocarbon 134a has been developed as a substitute for fluorocarbon 12 (dichlorodifluoromethane) which has been widely used as the refrigerant of domestic refrigerators, air conditioners, small-sized refrigerators for business use, automotive air conditioners and so on, because the characteristics of fluorocarbon 134a are similar to those of fluorocarbon 12.

However, fluorocarbon 134a exhibits solubility far different from that of a fluorocarbon containing a chlorine atom in its molecule, for example, fluorocarbon 12 or fluorocarbon 22 (monochlorodifluoromethane), because it does not contain any chlorine atom in its molecule. Accordingly, fluorocarbon 134a is poor in the compatibility with a naphthenic mineral oil or alkylbenzene which have been used as a refrigerator oil, thus causing problems such as lowering in the reversion in an evaporator, seizing of a compressor or abnormal vibration. Thus, the development of a refrigerator oil which is compatible with fluorocarbon 134a is highly desirable.

With respect to the oil for a refrigerator using fluorocarbon 134a as a refrigerant, U.S. Patent No. 4755316 proposed an at least difunctional polyalkylene glycol having a molecular weight of 2,000 or below. However, this oil is so hygroscopic that the water absorbed by the oil causes a failure in the actuation of an expansion valve of a refrigerator or blockage (water choking) thereof or accelerates the decomposition of the fluorocarbon to form hydrofluoric acid which is in danger of corroding the metallic part.

Although Japanese Patent Laid-Open Nos. 155093/ 1980 and 15592/1983 discloses lubricants for refrigerators comprising a neodentylpolyol ester, they are utterly silent about a lubricant for refrigerators which is well compatible with a chlorine-free fluorocarbon refrigerant such as fluorocarbon 134a.

The inventors of the present invention have intensively studied on various synthetic lubricants and have found that a specific kind of neopentylpolyol ester is excellent particularly in its compatibility with a chlorine-free fluorocarbon refrigerant (such as fluorocarbon 134a), has a reduced hygroscopicity and has excellent electrical insulation properties and inertness to fluorocarbons. The present invention has been accomplished on the basis of this finding.

Namely, the lubricant according to the present invention is one for a refrigerator using a chlorine-free fluorocarbon as the refrigerant and is characterized by comprising a neopentylpolyol ester of a fatty acid having 2 to 6 carbon atoms.

The chlorine-free fluorocarbon refrigerant to be used in the present invention includes fluorocarbon 134 (1,1,2,2-tetrafluoroethane), fluorocarbon 134a, fluorocarbon 143 (1,1,2-trifluoroethane), fluorocarbon 143a (1,1,l-trifluoroethane), fluorocarbon 152 (1,2-difluoroethane) and fluorocarbon 152a (1,1-difluoroethane), among which fluorocarbon 134a is preferable, because the characteristics thereof are similar to those of fluorocarbon 12 which is now generally used.

The fatty acid to be used as a starting material for the neopentylpolyol ester according to the present invention is one or more compounds selected from among straight-chain and branched fatty acids each having 2 to 6 carbon atoms. Examples of straight-chain fatty acids include acetic, propionic, butanoic, pentanoic and hexanoic acids, while those of the branched saturated fatty acids include 2-methylpropionic, 2-methylbutanoic, 3-methylbutanoic, trimethylacetic, 2-methylpentanoic, 3-methylpentanoic, 4-methylpentanoic, 2-ethylbutanoic, 2,2-dimethylbutanoic and 3,3-dimethylbutanoic acids.

Among these acids, butanoic, pentanoic, 2-methylpropanoic and 2-methylbutanoic acids are particularly preferred.

The neopentylpolyol to be used as the other starting material for the neopentylpolyol ester according to the present invention is a polyol having a neopentyl structure, i.e.,

a 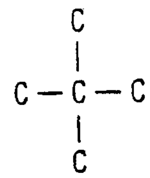 structure

preferably one containing at least 3 and most preferably at least 4 hydroxyl groups per molecule. Examples thereof include pentaerythritol, dipentaerythritol, tripentaerythritol, tetrapentaerythritol, ditrimethylolpropane, ditrimethylolethane, tritrimethylolpropane and tritrimethylolethane. Among them, pentaerythritol, dipentaerythritol and tripentaerythritol are preferably used in the fields requiring a medium or high viscosity (for example, refrigerator for automotive air conditioner or rotary type refrigeration machine for refrigerators) and tripentaerythritol is most desirably used in the fields requiring a particularly high viscosity.

A neopentylpolyol having less than 3 hydroxyl groups is unfavourable because of its poor compatibility with fluorocarbon 134a and its too low viscosity.

The neopentylpolyol ester according to the present invention can be prepared from one or more acids selected from among straight-chain and branched saturated fatty acids each having 2 to 6 carbon atoms as described above and one or more neopentylpolyols according to a conventional esterification or transesterification reaction.

It is preferable that the lubricant according to the present invention comprise only neopentylpolyol esters of fatty acids which have 2 to 6 carbon atoms as described above. The lubricant of the present invention may also comprise neopentylpolyol esters derived from fatty acids having 7 or more carbon atoms for example in order to achieve desired lubricating characteristics or volume resistivity of the lubricant. It is preferable however that the proportions of the fatty acids used are chosen so that the content of fatty acids each having 2 to 6 carbon atoms in the total fatty acids is 20 mole % or above and that the average number of carbon atoms of the fatty acids per hydroxyl group of the neopentylpolyol is 6 or below.

Although the lubricant for refrigerators according to the present invention may comprise only neopentylpolyol esters as described above, the lubricant is not precluded from further containing a known lubricant for refrigerators such as mineral oil, alkylbenzene or polyalkylene glycol. Further, the lubricant may contain additives which have been used in the lubricants for a refrigerator using a fluorocarbon as the refrigerant, in usual amounts. The additives include phosphates such as tricresyl phosphate; phosphites such as triethyl phosphite; epoxy compounds such as epoxidized soybean oil and bisphenol A diglycidyl ether; organotin compounds such as dibutyltin laurate; and antioxidants such as - naphthylbenzylamine, phenothiazine and BHT.

In a preferred embodiment of the present invention the lubricant comprises a mixture of neopentylpolyol esters of straight or branched chain saturated fatty acids characterised in that it comprises one or more neopentylpolyol esters in which the proportion of fatty acid residues having 2-6 carbon atoms is 20 mole per cent or more of the total fatty acid residues in the one or more esters and in that the average number of carbon atoms per residue of the fatty acid residues in the one or more esters is 6 or less.

The neopentylpolyol esters of fatty acids comprising the lubricant of the present invention may be prepared by esterifying or transesterifying a neopentylpolyol with one or more fatty acids characterised in that at least 20 mole per cent of the fatty acids have from 2 to 6 carbon atoms in the molecule and in that the average number of carbon atoms in the fatty acid molecules per hydroxy group in the neopentylpolyol is 6 or less.

The present invention also includes a refrigerant composition comprising a chlorine-free fluorocarbon and a lubricant of the present invention in which the volume ratio of chlorine-free fluorocarbon to neopentylpolyol fatty acid ester(s) is from 99:1 to 1:99.

The lubricant for refrigerators according to the present invention and fluorocarbon 134a are completely compatible with each other at substantially any ratio (1:99 to 99:1) in the practical service temperature range of a lubricant for refrigerators, i.e. in a temperature range of -50 to $60^{\circ}$ C.

Further, the lubricant for refrigerators according to the present invention exhibits low hygroscopicity and high volume resistivity unlike a polyalkylene glycol lubricant for refrigerators. Therefore the use of the lubricant of the present invention serves to solve the problem of hygroscopicity which has been thought to be causative of the troubles of a refrigerator and improve the electrical insulation properties.

The present invention will now be described in more detail by referring to the following Examples, though the present invention is not limited to them.

In the Examples and Comparative Examples, the following Samples 1 to 19 were used as lubricants.

Sample 1

a neopentylpolyol ester: prepared by using DPET (dipentaerythritol) as a neopentylpolyol component and a mixture comprising hexanoic acid and 2-methylpentanoic acid at a molar ratio of 50 : 50 as a fatty acid component, and having a kinematic viscosity at 40° C of 59 cSt, a pour point of -47.5° C, and an average number of carbon atoms of the fatty acids per hydroxyl group of the neopentylpolyol of 6.

Sample 2

a neopentylpolyol ester: prepared by using DPET (dipentaerythritol) as a neopentylpolyol component and a mixture comprising hexanoic acid, 2-methylpentanoic acid and 2-methylbutanoic acid at a molar ratio of 40 : 30 : 30 as a fatty acid component, and having a kinematic viscosity at 40° C of 69 cSt, a pour point of -45 C, and an average number of carbon atoms of the fatty acids per hydroxyl group of the neopentylpolyol of 5.7.

Sample 3

a neopentylpolyol ester: prepared by using DPET (dipentaerythritol) as a neopentylpolyol component and a mixture comprising hexanoic acid and 2-methylbutanoic acid at a molar ratio of 50 : 50 as a fatty acid component, and having a kinematic viscosity at 40° C of 71 cSt, a pour point of -45° C, and an average number of carbon atoms of the fatty acids per hydroxyl group of the neopentylpolyol of 5.5.

Sample 4

a neopentylpolyol ester: prepared by suing DPET (dipentaerythritol) as a neopentylpolyol component and 2-methylbutanoic acid as a fatty acid component, and having a kinematic viscosity at 40° C of 79 cSt, a pour point of -40° C, and an average number of carbon atoms of the fatty acid per hydroxyl group of the neopentylpolyol of 5.

Sample 5

a neopentylpolyol ester: prepared by using DPET (dipentaerythritol) as a neopentylpolyol component and a mixture comprising hexanoic acid and 2-methylpropionic acid at a molar ratio of 50 : 50 as a fatty acid component, and having a kinematic viscosity at 40° C of 68 cSt, a pour point of -45° C, and an average number of carbon atoms of the fatty acids per hydroxyl group of the neopentylpolyol of 5.

Sample 6

a neopentylpolypol ester: prepared by using PET (pentaerythritol) as a neopentylpolyol component and a mixture comprising butanoic acid and 2-methylpropionic acid at a molar ratio of 50 : 50 as a fatty acid component, and having a kinematic viscosity at 40° C of 25 cSt, a pour point of -50° C, and an average number of carbon atoms of the fatty acids per hydroxyl group of the neopentylpolyol of 4.

Sample 7

a neopentylpolyol ester: prepared by using DPET (dipentaerythritol) as a neopentylpolyol component and a mixture comprising butanoic acid and 2-ethylhexanoic acid at a molar ratio of 95 : 5 as a fatty acid component, and having kinematic viscosity at 40° C of 61 cSt, a pour point of -40° C, and an average number of carbon atoms of the fatty acids per hydroxyl group of the neopentylpolyol of 4.2.

Sample 8

a neopentylpolypol ester: prepared by using DPET (dipentaerythritol) as a neopentylpolyol component and a mixture comprising butanoic acid and isoheptanoic acid at a molar ratio of 80 : 20 as a fatty acid component, and having a kinematic viscosity at 40° C of 63 cSt, a pour point of -42.5 C, and an average number of carbon atoms of the fatty acids per hydroxyl group of the neopentylpolyol of 4.6.

Sample 9

a neopentylpolyol ester: prepared by using TPET (tripentaerythritol) as a neopentylpolyol component and a mixture comprising pentanoic acid, 2-methylbutanoic acid and 2-ethylbutanoic acid at a molar ratio of 50 : 25 : 25 as a fatty acid component, and having a kinematic viscosity at 40° C of 202 cSt, a pour point of -27.5° C, and an average number of carbon atoms of the fatty acids per hydroxyl group of the neopentylpolyol of 5.25.

Sample 10

a neopentylpolyol ester: prepared by using DTMP (ditrimethylolpropane) as a neopentylpolyol component and a mixture comprising pentanoic acid, 2-methylbutanoic acid and 3-methylbutanoic acid at a molar ratio of 65 : 30 : 5 as a fatty acid component, and having a kinematic viscosity at 40° C of 23 cSt, a pour point of -45° C, and an average number of carbon atoms of the fatty acids per hydroxyl group of the neopentylpolyol of 5.

Sample 11

a neopentylpolyol ester: prepared by using a mixture comprising TPET (tripentaerythritol) and Tetra PET (tetrapentaerythritol) at a molar ratio of 50 : 50 as a neopentylpolyol component and a mixture comprising pentanoic acid, 2-methylbutanoic acid and 3-methylbutanoic acid at a molar ratio of 65 : 30 : 5 as a fatty acid component, and having a kinematic viscosity at 40° C of 306 cSt, a pour point of -20° C, and an average number of carbon atoms of the fatty acids per hydroxyl group of the neopentylpolyols of 5.

Sample 12

a neopentylpolyol ester: prepared by using a mixture comprising PET (pentaerythritol) and DPET (dipentaerythritol) at a molar ratio of 50 : 50 as a neopentylpolyol component and a mixture comprising pentanoic acid, 2-methylbutanoic acid and 3-methylbutanoic acid at a molar ratio of 65 : 30 : 5 as a fatty acid component, and having a kinematic viscosity at 40° C of 32 cSt, a pour point of -45° C, and an average number of carbon atoms of the fatty acids per hydroxyl group of the neopentylpolyols of 5.

Sample 13

a neopentylpolyol ester: prepared by using DPET (dipentaerythritol) as a neopentylpolyol component and a mixture comprising 2-methylpropanoic acid and isoheptanoic acid at a molar ratio of 30 : 70 as a fatty acid component, and having a kinematic viscosity at 40° C of 65 cSt, a pour point of -45° C, and an average number of carbon atoms of the fatty acids per hydroxyl group of the neopentylpolyol of 6.1.

Sample 14

a neopentylpolyol ester: prepared by using DPET (dipentaerythritol) as a neopentylpolyol component and a mixture comprising 2-methylpropanoic acid and isoheptanoic acid at a molar ratio of 10 : 90 as a fatty acid component, and having a kinematic viscosity at 40° C of 67 cSt, a pout point of -45° C, and an average number of carbon atoms of the fatty acids per hydroxyl group of the neopentylpolyol of 6.7.

Sample 15

a neopentylpolyol ester: prepared by using DPET (dipentaerythritol) as a neopentylpolyol component and a mixture comprising heptanoic acid and isoheptanoic acid at a molar ratio of 50 : 50 as a fatty acid component, and having a kinematic viscosity at 40° C of 68 cSt, a pour point of -45° C, and an average number of carbon atoms of the fatty acids per hydroxyl group of the neopentylpolyol of 7.

Sample 16

a neopentylpolyol ester: prepared by using DPET (dipentaerythritol) as a neopentylpolyol component and 2-ethylhexanoic acid as a fatty acid component, and having a kinematic viscosity at 40° C of 156 cSt, a pour point of -35° C, and an average number of carbon atoms of the fatty acid per hydroxyl group of the neopentylpolyol of 8.

Sample 17

a polyalkylene glycol compound: represented by the following formula:

$$HO(CH_2\overset{\overset{CH_3}{|}}{C}HO)_7H$$

and a kinematic viscosity at 40° C of 34 cSt and a pour-point of -42.5° C.

Sample 18

a polyalkylene glycol compound: represented by the following formula:

$$C_4H_9O(CH_2\overset{\overset{CH_3}{|}}{C}HO)_{10}H$$

and having a kinematic viscosity at 40° 6 of 36 cSt and a pour point of -55° C.

Sample 19

a polyalkylene glycol compound: represented by the following formula:

$$HO(CH_2\overset{\overset{CH_3}{|}}{C}HO)_{17}H$$

and having a kinematic viscosity at 40° C of 73 cSt and a pour point of -45° C.

Example 1

Either 15 parts by weight of each of the samples listed in Table 1 and 85 parts by weight of fluorocarbon 134a (case 1) or 60 parts by weight of each of the samples listed in Table 1 and 40 parts by weight of fluorocarbon 134 a (case 2) were fed into a 1-ℓ glass autoclave to determine the compatibility at a temperature of -60 to 100° C. The results are given in Table 1.

Table 1

| Sample no. | Compatibility | |
|---|---|---|
| | case 1 | case 2 |
| 1 | cloudy at -51°C or below and at 96°C or above | completely dissolved |
| 2 | completely dissolved | completely dissolved |
| 3 | completely dissolved | completely dissolved |
| 4 | completely dissolved | completely dissolved |
| 5 | completely dissolved | completely dissolved |
| 6 | completely dissolved | completely dissolved |
| 7 | completely dissolved | completely dissolved |
| 8 | completely dissolved | completely dissolved |
| 9 | completely dissolved | completely dissolved |
| 10 | completely dissolved | completely dissolved |
| 11 | completely dissolved | completely dissolved |
| 12 | completely dissolved | completely dissolved |
| 13 | cloudy at -30°C or below and at 86°C or above | cloudy at -35°C or below and at 86°C or above |

Comparative Example 1

The samples listed in Table 2 were examined for the compatibility with fluorocarbon 134a in a similar manner to that of case 1 of Example 1. The results are given in Table 2.

Table 2

| Sample no. | Compatibility |
|---|---|
| 14 | cloudy at -12°C or below and at 76°C or above |
| 15 | cloudy at 14°C or below and at 68°C or above |
| 16 | cloudy at 33°C or below and at 62°C or above |

Example 2

10 g of each of the samples listed in Table 3 was put in a 100-ml beaker and the beaker was placed in a thermo-hygrostat at 20° C and 60% R.H. to determine the weight change after 24 hours. The results are given in Table 3.

Table 3

| Sample no. | Wt. before test (g) | Wt. after test (g) | Wt. increase (mg) |
|---|---|---|---|
| 1 | 10.0003 | 10.0009 | 0.6 |
| 2 | 10.0001 | 10.0019 | 1.8 |
| 3 | 10.0002 | 10.0014 | 1.2 |
| 6 | 10.0000 | 10.0021 | 2.1 |
| 7 | 10.0001 | 10.0030 | 2.9 |
| 9 | 10.0003 | 10.0006 | 0.3 |

Comparative Example 2

The samples listed in Table 4 were examined for weight change after 24 hours (hygroscopicity) in a similar manner to that of Example 2. The results are given in Table 4.

As shown in Table 4, the samples exhibit weight increases larger than those of the samples of Example 2, i.e., the samples are more hygroscopic than those of Example 2.

Table 4

| Sample no. | Wt. before test (g) | Wt. after test (g) | Wt. increase (mg) |
|---|---|---|---|
| 17 | 10.0000 | 10.6091 | 609.1 |
| 18 | 10.0001 | 10.1084 | 108.3 |
| 19 | 10.0002 | 10.1614 | 161.2 |

Example 3

Volume resistivity is an indication of electrical insulation properties. The samples listed in Table 5 were examined for volume resistivity at a humidity of 70% and a temperature of 30°C with a DC amplifier according to JIS C-2101. Advantest TR-8601 and Advantest TR-44 (both mfd. by Advantest Corp.) were used as a microammeter and a cell for determining the resistance of liquid, respectively. The voltage applied was 100 V. The results are given in Table 5.

Table 5

| Sample no. | Volume resistivity (Ωcm) |
|---|---|
| 1 | $3.1 \times 10^{12}$ |
| 2 | $8.1 \times 10^{12}$ |
| 3 | $4.3 \times 10^{12}$ |
| 4 | $1.4 \times 10^{13}$ |
| 9 | $8.3 \times 10^{11}$ |

Comparative Example 3

The samples listed in Table 6 were examined for volume resistivity in a similar manner to that of Example 3. The results are given in Table 6.

It is apparent from the results given in Table 6 that the polyalkylene glycol compounds are inferior to the neopentylpolyol esters of the present invention in volume resistivity.

Table 6

| Sample no. | Volume resistivity (Ωcm) |
|---|---|
| 17 | $1.4 \times 10^9$ |
| 18 | $2.1 \times 10^{10}$ |
| 19 | $2.6 \times 10^9$ |

Example 4 and Comparative Example 4

15 parts by weight of each of the samples listed in Table 7 and 85 parts by weight of fluorocarbon 134a were put in a 100-ml autoclave made of stainless steel (SUS-316). Three metal pieces (50 x 25 x 1.5 mm) respectively made of steel, copper or aluminum were placed in the autoclave. After hermetically sealing the autoclave, the contents were kept at 150°C by heating for 14 days (336 hours) to carry out a heat test. After the completion of the heat test, the autoclave was subjected to vacuum deaeration to remove the fluorocarbon 134a. The resulting lubricant was examined for viscosity and appearance. Further, the metal pieces were washed with toluene and ethanol to determine the weight change thereof. The results are given in Table 7.

In a similar manner to that described above, the comparative samples No. 17 to 19 were examined for stability. It is apparent that these samples each exhibit a larger viscosity change and each have a greater influence upon the metals than those of the compounds according to the present invention. The test results are given in Table 7.

Table 7

| Sample no. | Viscosity (40°C, cSt) | | Viscosity change (%) | Appearance (Gardner color scale) | | Wt. change of metal piece ($mg/cm^2$) | | |
|---|---|---|---|---|---|---|---|---|
| | before test | after test | | before test | after test | steel | copper | aluminum |
| 1 | 59 | 60 | +2 | yellow transparent(6) | yellow transparent(6) | ±0.00 | ±0.00 | ±0.00 |
| 2 | 69 | 71 | +3 | yellow transparent(5) | yellow transparent(5) | ±0.00 | ±0.00 | ±0.00 |
| 3 | 71 | 74 | +4 | yellow transparent(5) | yellow transparent(5) | ±0.00 | ±0.00 | ±0.00 |
| 9 | 202 | 209 | +1 | yellow transparent(5) | yellow transparent(5) | ±0.00 | ±0.00 | ±0.00 |
| 17 | 34 | 21 | -38 | pale yellow transparent(1) | brown transparent(8) | -6.1 | -1.8 | -0.9 |
| 18 | 36 | 24 | -33 | pale yellow transparent(1) | brown transparent(8) | -4.3 | -1.1 | -0.4 |
| 19 | 73 | 46 | -37 | pale yellow transparent(1) | brown transparent(9) | -5.2 | -1.5 | -0.6 |

## Claims

1. A lubricant for a refrigerator using a chlorine-free flurocarbon as the refrigerant, characterized by comprising a neopentylpolyol ester of a fatty acid having 2 to 6 carbon atoms.

2. A lubricant as claimed in claim 1 characterized in that it comprises one or more neopentylpolyol esters

in which the proportion of fatty acid residues having 2-6 carbon atoms is 20 mole percent or more of the total fatty acid residues in the one or more esters and in that the average number of carbon atoms per residue of the fatty acid residues in the one or more esters is 6 or less.

**3.** A lubricant as claimed in claim 1 or 2 characterized in that the neopentylpolyol ester is prepared by esterifying or transesterifying a neopentylpolyol with one or more fatty acids characterized in that at least 20 mole percent of the fatty acids have from 2 to 6 carbon atoms in the molecule and in that the average number of carbon atoms in the fatty acid molecules per hydroxy groups in the neopentylpolyol is 6 or less.

**4.** A lubricant as claimed in any of claims 1 2 or 3 characterized in that the neopentylpolol has at least 3 hydroxy groups per molecule.

**5.** A lubricant as claimed in claim 4 characterized in that the neopentylpolyol has at least 4 hydroxy groups per molecule.

**6.** A lubricant as claimed in any of claims 1 to 5 characterized in that it further contains one or more lubricants different from the lubricant defined in claim 1 and/or one or more additives selected from phosphates, phosphites, epoxy compounds, organic tin compounds, antioxidants and BHT.

**7.** A refrigerant composition characterized in that it comprises a chlorine-free flurocarbon and a lubricant as claimed in any of claims 1 to 6, the volumne ratio of chlorine-free fluorocarbon to neopentylpolyol fatty acid ester(s) in the composition being from 99:1 to 1:99.

European Patent Office

# EUROPEAN SEARCH REPORT

Application Number

EP 90 31 2905

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WORLD PATENT INDEX, accession no. 81-87972D [48], Derwent Publications Ltd, London, GB; & JP-A-56 131 548 (NIPPON OIL & FATS LTD) * The whole abstract * | 1-5,7 | C 09 K 5/04 |
| Y | JAPANESE PATENT OFFICE, Tokyo, JP, FILE SUPPLIER JAPS; & JP-A-55 157 537 (NIPPON OIL & FATS LTD) * The whole abstract * | 1-5,7 | |
| Y | JAPANESE PATENT OFFICE, Tokyo, JP, FILE SUPPLIER JAPS; & JP-A-63 310 502 (NIPPON OIL & FATS LTD) * The whole abstract * | 1-5,7 | |
| A | WO-A-8 808 023 (FROESCHMANN) * Page 5, lines 16-24; page 10, lines 7-28; claims * | 1-7 | |
| D,A | US-A-4 755 316 (MAGID et al.) * Column 3, lines 60-68; column 4, lines 1-68; column 5, lines 1-13; examples 1,2; claims * | 1-7 | |

TECHNICAL FIELDS SEARCHED (Int. Cl.5)

C 09 K
C 10 M

The present search report has been drawn up for all claims

| Place of search | Date of completion of search | Examiner |
|---|---|---|
| The Hague | 20 February 91 | LEDER M. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document